# EUROPÄISCHE PATENTSCHRIFT

(11) **EP 1 152 306 B1**
(45) Veröffentlichungstag und Bekanntmachung des Hinweises auf die Patenterteilung: **03.03.2004**
(21) Anmeldenummer: 01110296.9
(22) Anmeldetag: 26.04.2001
(51) Int. Cl.: G05B 11/42, G05B 13/02

(54) **Schaltungsanordnung zur Modifizierung eines Sollwertes**
Circuit arrangement for modifying a target value
Circuit de modification d' une valeur de consigne

(30) Priorität: 05.05.2000 DE 10021856
(43) Veröffentlichungstag der Anmeldung: 07.11.2001
(73) Patentinhaber: Bayerische Motoren Werke Aktiengesellschaft, 80809 München (DE)
(72) Erfinder: Baumgarten, Götz, Dr., 85757 Karlsfeld (DE)

(56) Entgegenhaltungen:
- EP-A- 0 867 362
- DE-A- 3 220 491
- US-A- 3 201 675
- US-A- 4 280 083
- T. BÜNTE: "Beiträge zur robusten Lenkregelung von Personenkraftwagen" FORTSCHRITT-BERICHTE VDI, Bd. 12, Nr. 366, 1998, XP002200469
- J.J. BUCHHOLZ: "SCARLET" INSTITUTSBERICHT IB 111-93/18, INSTITUT FÜR FLUGMECHANIK BRAUNSCHWEIG, 1993, XP002200470

## Beschreibung

Die Erfindung betrifft eine Schaltungsanordnung zur Modifizierung eines Sollwertes gemäß dem Oberbegriff des Anspruchs 1.

Beim Betrieb eines Stellgliedes oder Aktuators in einem Regelkreis besteht bei einigen Anwendungen das Problem, dass das entsprechende Aktuatorglied der Sollwertvorgabe nicht in dem erforderlichen Maße folgen kann. Ab einer bestimmten Stellrate weicht der Istwert mehr oder weniger deutlich vom Sollwert ab. Dadurch entsteht eine Nacheilung des Istwertes, die nicht nur zu einer Amplitudenabweichung zwischen dem Soll- und dem Istwert sondern auch zu einer Phasenverzögerung des Istwerts gegenüber dem Sollwert führt. Letzteres ist besonders bei einem geschlossenen Regelkreis kritisch. Im Ergebnis kann nämlich die Stabilität eines solchen Regelkreises verringert werden und im Extremfall ganz verloren gehen. Der Regelkreis wird als Folge davon instabil oder weist nicht-lineare Grenzzyklen auf.

Aus der Veröffentlichung "Scarlet", Institutsbericht 111 - 93/18, J.J. Buchholz, DLR, Institut für Flugmechanik, Braunschweig, ist ein fly-by-wire-System bekannt, welches eine Ratenbegrenzung eines Steuerknüppelkommandos für ein Höhenruder beschreibt. Weicht der Istwinkel des Höhenruders vom Sollwert ab, so wird dieser so modifiziert, dass zumindest die Phasenverzögerung zwischen Soll- und Istwert des Höhenruders nicht zu groß wird.

Allerdings ist die Logik des vorgenannten Filters einer großen Komplexität unterworfen, so dass keine grundlegenden, analytischen und regelungstechnischen Untersuchungen möglich sind. Insgesamt weist der Filter eine zu komplizierte Logik auf, um die gängigen regelungstechnischen Analyseverfahren anwenden zu können. Somit kann keine Garantie dafür übernommen werden, dass ein unkritisches Verhalten bei jedem Manöver vorliegt.

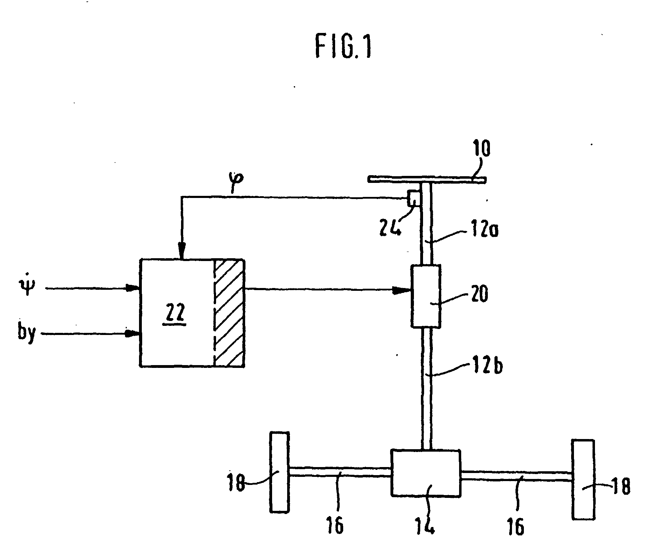

In der Veröffentlichung "Beiträge zur robusten Lenkregelung von Personenkraftwagen", Fortschritt-Berichte VDI, Reihe 12, Nr. 366, T. Bünte, ist eine Schaltung beschrieben, bei der vor einem Integrations-Reglerzweig (I-Reglerzweig) eine Amplitudenbegrenzung eingefügt ist. Die Begrenzungswerte der Amplitudenbegrenzung entsprechen dabei den Stellratenbegrenzungen des Aktuators. Allerdings kann diese Lösung bei der Anwendung im Rahmen einer Überlagerungslenkung (siehe Fig. 1) nur im Falle eines reinen I-Reglers verwendet werden.

Des Weiteren ist aus der US 3,201,675 eine Schaltung zur Kommandomodifizierung bei einem Flug-Steuerungssystem bekannt, bei der zwischen einer Kommandoquelle und einem anzusteuernden Aktuator in einem ersten Zweig zumindest ein Verstärker, ein Begrenzungsglied sowie ein Integrationsglied angeordnet sind und über ein Differenzglied das Ausgangssignal der Schaltung auf den Eingang der Schaltung zurückgeführt wird. Hierdurch soll eine quasie dauernde Kommandomodifizierung, ohne plötzlich auftretende Kommandoänderungen mit ungewollten Amplitudenhöhen, sichergestellt werden.

Aufgabe der vorliegenden Erfindung ist es, eine Schaltungsanordnung zur Modifizierung eines Sollwerts anzugeben, mit der sowohl eine möglichst phasentreue wie auch eine möglichst amplitudentreue Regelung in einem Regelkreis mit einem Aktuator, der eine Ratenbegrenzung aufweist, durchführbar ist.

Diese Aufgabe wird durch die im Anspruch 1 genannten Merkmale gelöst.

Erfindungswesentlich ist dabei, dass zumindest zwei Schaltungszweige vorgesehen sind, wobei der erste Schaltungszweig Schaltglieder derart umfasst, dass eine Modifizierung des Sollwertes in Richtung einer phasentreuen Regelung durchführbar ist. Der zweite Schaltungszweig dagegen umfasst Schaltglieder derart, dass eine Modifizierung des Sollwertes in Richtung einer amplitudentreuen Regelung durchführbar ist. Die beiden Schaltungszweige sind über ein Kombinationselement, beispielsweise einen Summierer, einen Multiplizierer etc., miteinander verbunden. Vor oder in diesem Kombinationselement sind entweder im ersten und/oder im zweiten Schaltungszweig Verstärkungsglieder vorgesehen, mit dem bzw. mit denen gewünschte Einflussverhältnisse der einzelnen Schaltungszweige einstellbar sind.

Zum besseren Verständnis der Erfindung wird auf zum Teil bereits bekannte Schaltungsanordnungen und deren Resultate hingewiesen.

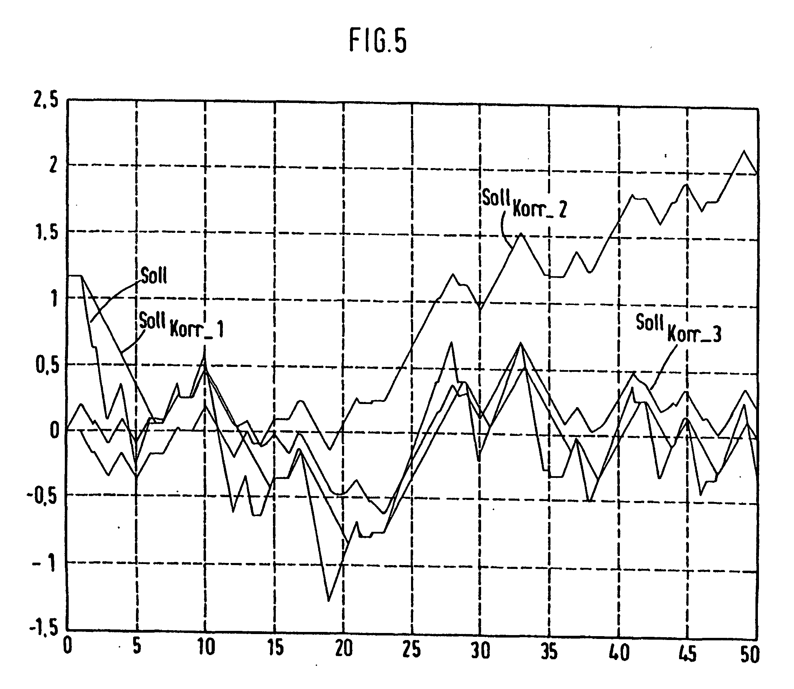

In den Figuren sind mehrere Schaltungsanordnungen dargestellt, wobei es sich bei den Schaltungsanordnungen in den Fig. 4 sowie 6 bis 11 um später noch genauer beschriebene Ausführungsformen der vorliegenden Erfindung handelt.

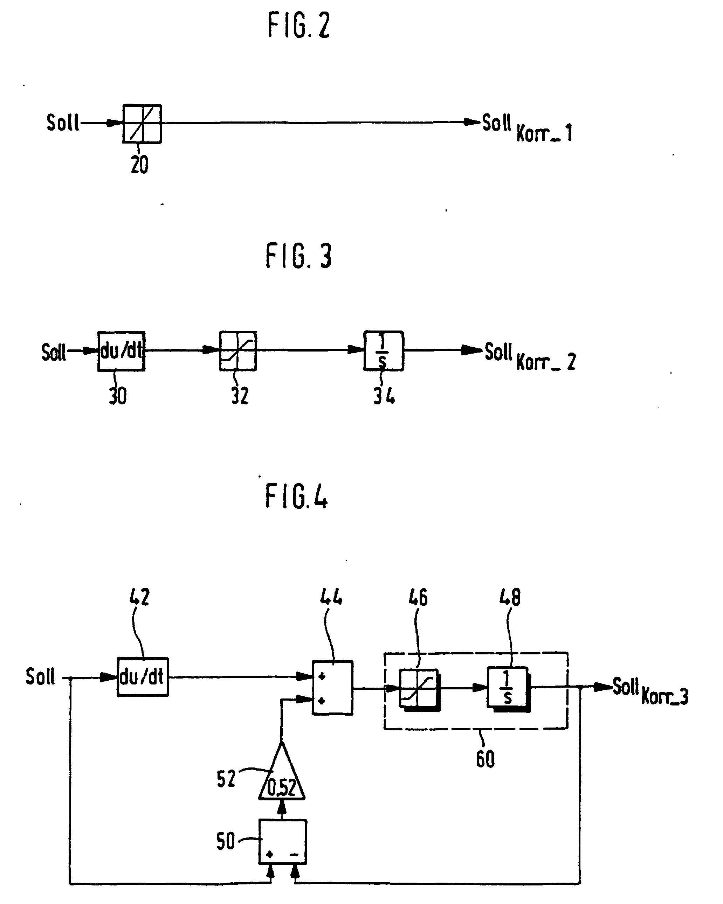

Fig. 2 zeigt eine an sich bekannte Schaltungsanordnung mit einem einzelnen Schaltglied, nämlich einem Stellratenbegrenzer 20, der aus dem eingehenden Sollsignal ein korrigiertes Sollsignal Soll_{korr_}1 erzeugt. Es ist allgemein bekannt, dass ein Stellratenbegrenzer einen modifizierten Sollwert für eine maximal Amplitudentreue erzeugt. Das Resultat der in Fig. 2 gezeigten Schaltung ist in dem in Fig. 5 dargestellten Diagramm zu erkennen, in dem verschiedene Werte, nämlich ein Sollwert und drei korrigierte Sollwerte, über der Zeit dargestellt sind. Eine erste Kurve (mit "Soll" bezeichnet) stellt einen ursprünglich vorhandenen Sollwert dar. Die übrigen Graphen (Soll_{korr_}1, Soll_{korr_}2 und Soll_{korr_}3) sind korrigierte Sollwerte aus den verschiedenen Schaltungen.

Durch die in Fig. 2 dargestellte Ratenbegrenzung erhält man einen korrigierten Sollwert, der in Fig. 5 mit Soll_{korr_}1 dargestellt ist. Wie zu erkennen ist, verläuft die Amplitude dieses korrigierten Sollwertes Soll_{korr_}1 über das gesamte Diagramm hinweg sehr nahe an der Amplitude des ursprünglichen Sollwertes (Soll). Allerdings ist eine signifikante Phasenverschiebung zu beobachten, was - wie eingangs bereits erwähnt - zu einem Problemen hinsichtlich eines instabilen Regelungskreises führen kann.

Eine Schaltungsanordnung, mit der die Phasentreue besser eingehalten werden kann, ist in Fig. 3 dargestellt. Dort wird der Sollwert zunächst in einem Differenzierglied 30 bezüglich seiner zeitlichen Änderungen ausgewertet. Dieses Signal wird dann an ein Amplitudenbegrenzungsglied 32 weitergegeben, welches eine Stellratenänderung dann begrenzt, wenn sie zu groß wird. Das aus dem Amplitudenbegrenzungsglied 32 ausgehende Signal wird in dem Integrationsglied 34 weiterverarbeitet, so dass am Ende einer korrigierter Sollwert Soll_{korr_}2 resultiert, dessen Verlauf ebenfalls in Fig. 5 dargestellt ist. Dabei kann man aus Fig. 5 erkennen, dass sich der korrigierte Sollwert Soll_{korr_}2 zwar sehr phasentreu verhält, jedoch liegt eine signifikante Amplitudenabweichung vor. Mit anderen Worten findet ein "Wegdriften" des modifizierten Sollwertes statt, was unakzeptabel ist.

Mit der vorliegenden Erfindung, auf die nachfolgend noch anhand von Ausführungsbeispielen näher eingegangen wird, werden die beiden oben genannten und je nach Schaltungsanordung auftretenden Probleme, nämlich fehlende Amplitudentreue oder fehlende Phasentreue im wesentlichen vermieden. Dies erreicht man durch die Kombination von Schaltungszweigen, die auf der einen Seite eine phasentreue Regelung und auf der anderen Seite eine amplitudentreue Regelung durchführen. Die Gewichtung der einzelnen Schaltungszweige kann über einen Verstärkungsfaktor in den einzelnen Schaltungszweigen oder in einem Kombinationselement erreicht werden. Dabei kann die Verstärkung auch veränderlich, und zwar in Abhängigkeit von verschiedenen, von der jeweiligen Regelung abhängigen Eingangssignalen gestaltet werden. Eine konstante Verstärkung ist also nicht zwingend erforderlich.

Gemäß einer bevorzugten Ausführungsform ist in dem ersten Schaltungszweig, welcher für die phasentreue Regelung zuständig ist, ein Differenzierglied, welches aus dem Sollwert eine Ableitung bildet, ein Amplitudenbegrenzungsglied mit einem Eingang, welcher mittelbar oder unmittelbar mit dem Ausgang des Differenzierglieds verbunden ist, und ein Integrationsglied, dessen Eingang mit dem Ausgang des Amplitudenbegrenzungsglieds verbunden ist und an dessen Ausgang ein modifizierter Sollwert anliegt, vorgesehen. Wie bereits aus den obigen Anmerkungen deutlich wird, kann man damit eine sehr gute Phasentreue erreichen, so dass bei Verwendung des korrigierten Sollwertes keine Stabilitätsverschlechterung in einer Regelungsanordnung zu befürchten ist.

Allerdings würde bei alleiniger Verwendung dieses ersten Schaltzweiges - wie ebenfalls oben erläutert - die Gefahr des "Wegdriftens" der Amplitude vorliegen.

Dies vermeidet man dadurch, dass im zweiten Schaltungszweig beispielsweise ein Differenzglied (Subtrahierer) enthalten ist, dessen positiver Eingang den ursprünglichen Sollwert enthält und dessen negativer Eingang mit dem modifizierten Sollwert beaufschlagt ist. Durch die Subtraktion der beiden Sollwerte, nämlich des ursprünglichen Sollwertes und des korrigierten Sollwertes, erhält man eine Größe in Form einer Differenz, welche gemäß einer weiteren vorteilhaften Ausführungsform in diesem Zweig mit einem bestimmten Verstärkungsfaktor belegt wird. Durch Zusammenführen dieser Größe mit der aus dem Differenzierglied des ersten Zweiges abstammenden Größe erhält man einen korrigierten Sollwert, mit welchem sich auch bei einem stellratenbegrenzten Aktuator eine amplituden- wie auch eine phasentreue Regelung gleichzeitig und in zufriedenstellender Weise realisieren lässt.

Die Verstärkung kann dabei im ersten oder/und im zweiten Zweig erfolgen. Sie regelt lediglich das Einflussverhältnis der verschiedenen Zweige aufeinander. Natürlich kann die Gewichtung auch im Kombinationselement selbst festgelegt werden. Je nachdem, welcher Zweig einen größeren Einfluss hat, überwiegt die Amplitudenoder die Phasentreue.

Als Kombinationselement ist vorzugsweise ein Summierer vorgesehen, beispielsweise mit zwei oder drei Eingängen. Bei der Verwendung eines Summierers mit zwei Eingängen kann der erste Eingang mit dem Differenzierglied verbunden sein. Der zweite Eingang wäre dann mit dem Differenzglied verbunden. Der Ausgang des ersten Summierers ist wiederum mit dem Amplitudenbegrenzungsglied gekoppelt.

Natürlich können auch vollkommen andere Schaltungsanordnungen gewählt werden, die sich eines amplituden- und phasentreuen Zweiges bedienen und diese Zweige miteinander kombinieren.

Weitere Vorteile und Merkmale der Erfindung gehen aus den Unteransprüchen hervor.

Im folgenden wird die vorliegende Erfindung anhand von verschiedenen Ausführungsbeispielen und mit Bezug auf die beiliegenden Zeichnungen näher erläutert. Die beiliegenden Zeichnungen zeigen in
- Fig. 1: eine schematische Skizze einer Lenkanordnung und -schaltung für ein Fahrzeug,
- Fig. 2: ein Blockschaltdiagramm einer an sich bekannten Schaltungsanordnung zur Modifizierung eines Sollwertes,
- Fig. 3: ein Blockdiagramm einer weiteren Schaltungsanordnung zur Modifizierung eines Sollwertes,
- Fig. 4: ein Blockdiagramm einer erfindungsgemäßen Schaltungsanordnung zur Modifizierung eines Sollwertes,
- Fig. 5: ein Diagramm, in dem die verschiedenen Sollwerte graphisch dargestellt sind,
- Fig. 6: ein Blockdiagramm einer Schaltungsanordnung wie in Fig. 4, jedoch in eine Regler-Aktuator-Schaltung eingefügt,
- Fig. 7: ein Blockdiagramm einer zweiten Ausführungsform der Erfindung, die gegenüber Fig. 6 etwas modifiziert ist,
- Fig. 8: ein Blockdiagramm einer dritten Ausführungsform der Erfindung, die ebenfalls gegenüber Fig. 6 etwas modifiziert ist,
- Fig. 9: ein Blockdiagramm einer vierten Ausführungsform der Erfindung, die ebenfalls gegenüber Fig. 6 etwas modifiziert ist,
- Fig. 10: ein Blockdiagramm einer fünften Ausführungsform der Erfindung, die ebenfalls gegenüber Fig. 6 etwas modifiziert ist,
- Fig. 11: ein Blockdiagramm einer sechsten Ausführungsform der Erfindung und
- Fig. 12: ein Blockdiagramm einer weiteren Ausführungsform der Erfindung, wobei ein Stellmotor mit einem integrierenden Stellverhalten verwendet ist.

In Fig. 1 ist ein Beispiel für einen Anwendungsbereich der vorliegenden Erfindung dargestellt, nämlich eine Lenkanordnung für ein Fahrzeug. Die Lenkanordnung umfasst im vorliegenden Beispiel ein Lenkrad 10, welches mit einem ersten Teil einer Lenksäule 12a verbunden ist. Die Lenksäule 12a ist über ein Getriebe 20 mit einem zweiten Teil der Lenksäule 12b verbunden, welche wiederum eine Verbindung zu einem Servogetriebe 14 eines Lenkgestänges 16 herstellt, über welches Räder 18 in bekannter Weise verstellt werden.

An dem ersten Teil der Lenksäule 12a ist ein Sensor 24 angeordnet, der den Lenkwinkel ϕ aufnimmt und an eine Steuereinheit 22 weitergibt. Die Steuereinheit 22 erhält ferner Eingangssignale, welche vorliegend die Giergeschwindigkeit ψ̇, die Querbeschleunigung by sowie die Fahrzeuggeschwindigkeit v umfassen, und verarbeitet diese zusammen mit dem Lenkwinkel ϕ zu einer Ausgangsgröße, welche an das Getriebe 20 in Form eines Sollwertes abgegeben wird. Der Sollwert dient als Lenkwinkelgröße, mit welcher der von einem Fahrer vorgegebene Lenkwinkel ϕ überlagert wird (Überlagerungslenkung). Die Überlagerungslenkung wird dabei von einem Aktuator im Getriebe 20 umgesetzt, der den zweiten Teil der Lenksäule 12b in dem erforderlichen Maße gegenüber dem ersten Teil der Lenksäule 12a relativ verdreht. Dieser Aktuator kann jedoch nur Vorgaben bis zu einer begrenzten Stellgeschwindigkeit umsetzten.

Um Regelungsinstabilitäten zu vermeiden, sollte daher von der Steuereinheit 22 ein Sollwert zur Verfügung gestellt werden, der solche Probleme nicht aufkommen lässt. Dafür ist in der Steuereinheit 22 eine Untereinheit enthalten (vgl. Schraffur) welche die berechnete Stellgröße (nachfolgend als ursprünglicher Sollwert bezeichnet) derart modifiziert, dass es weder zu einer signifikanten Phasenabweichung noch zu einer signifikanten Amplitudenabweichungen kommt.

Zu diesem Zweck wird gemäß einer ersten Ausführungsform der Erfindung auf eine Schaltung zurückgegriffen, wie sie in Fig. 4 dargestellt ist. In dieser Schaltung wird ein Sollwert Soll (ursprünglicher Sollwert) gleichzeitig zwei Schaltungszweigen zugeführt.

Der erste Schaltungszweig besteht aus einem Differenzierglied 42, einem Amplitudenbegrenzungsglied 46 und einem Integrationsglied 48. Das Differenzierglied 42 stellt die zeitlichen Veränderungen des Sollwertes Soll fest und gibt diese an das Amplitudenbegrenzungsglied 46 weiter, welches diese Werte dann akzeptiert, wenn sie innerhalb bestimmter Bereiche liegen. Sind die Änderungen der Sollwerte jedoch zu groß, so werden sie "gekappt" bzw. noch akzeptierbare Maximalwerte dafür eingesetzt. Das aus dem Amplitudenbegrenzungsglied 46 stammende Signal wird in dem Integrationsglied 48 integriert, so dass am Ende des ersten Schaltungszweiges wieder eine Sollgröße, nunmehr eine modifizierte Sollgröße Soll_{korr_}3 zur Verfügung steht, welche an ein Stellglied abgegeben wird.

Um die durch die gerade beschriebene Schaltungsanordnung auftretende Amplitudenabweichung auszugleichen, wird der korrigierte Sollwert Soll_{korr_}3 einem Differenzglied 50 (Subtrahierer) im zweiten Schaltungszweig zur Verfügung gestellt, an dessen positiven Eingang der ursprüngliche Sollwert Soll anliegt. Im Differenzglied 50 wird die Differenz zwischen ursprünglichem Sollwert Soll einerseits und korrigiertem Sollwert Soll_{korr_}3 gebildet, so dass am Ausgang des Differenzglieds 50 die Abweichung von ursprünglichem Sollwert und korrigiertem Sollwert vorliegt. Ein Verstärker 52 (vorliegend Verstärkungsfaktor 0,52) legt die Gewichtung des Einflusses von amplituden- und phasentreuem Schaltungszweig fest.

Die Information aus dem Verstärker 52 wird nunmehr einem Summierer 44 zugeführt, welcher zwischen dem Differenzierglied 42 und dem Amplitudenbegrenzungsglied 46 zwischengeschaltet ist und zur Kopplung der beiden Schaltungszweige dient (Kombinationselement). Einerseits erhält der Summierer 44 an einem ersten Eingang das Signal von dem Differenzierglied 42. Andererseits erhält der Summierer 44 an seinem zweiten Eingang das Signal vom Verstärker 52. Beide Signale werden summiert und bilden das den Summierer 44 verlassende Ausgangssignal, welches vorliegend direkt an das Amplitudenbegrenzungsglied 46 weitergegeben wird. Im Amplitudenbegrenzer 46 werden ein bzw. zwei Werte vorgegeben, die dem maximalen Betrag der Stellgeschwindigkeit bzw. der maximalen und minimalen Stellgeschwindigkeit entsprechen. Demnach kann die Erfindung auch unterschiedliche große Stellgeschwindigkeitsbegrenzungen für beide Laufrichtungen berücksichtigen.

Die gerade erläuterte Lösung ist in jedem Regelungsfall zwischen einem Regler und einem Stellglied einsetz- und anwendbar. Überdies enthält sie eine einfache Logik, insbesondere einfache lineare Elemente und lediglich ein einziges nicht-lineares Element, so dass bekannte Verfahren zur Überprüfung der Stabilität (z. B. Zweiortskurvenverfahren) angewendet werden können.

Die obige Lösung stellt zwar einen Kompromiss dar, der im Fall einer Stellratenbegrenzung eines Stellmotors zu schließen ist, nämlich einerseits eine möglichst kleine Phasenverzögerung und andererseits eine möglichst kleine Amplitudenabweichung zu erreichen, jedoch liefert dieser Kompromiss die Regelungsstabilität sicherstellende Werte. Durch die vorliegend in dem zweiten Zweig durchgeführte Verstärkung wird die Amplituden- und die Phasentreue gewichtet. Ist die Verstärkung (vorliegend 0,52) Null, so liegt eine absolute Phasentreue vor, jedoch kann keine Amplitudentreue erreicht werden. Wird die Verstärkung sehr groß gewählt, verhält sich die Schaltung wie eine reine Ratenbegrenzung und erzeugt eine maximal mögliche Amplitudentreue, jedoch kann keine Phasentreue erreicht werden.

Ein wirtschaftlicher Vorteil der Erfindung liegt in ihrem Potential, durch Wahl eines schwächer dimensionierten Stellantriebes mit kleinerer maximaler Stellgeschwindigkeit Kosten einzusparen. Die maximalen Stellgeschwindigkeiten bzw. Stellgeschwindigkeitsbegrenzungen treten meist nur in einem Bruchteil der Betriebszeit auf. Da sie aber ohne Anwendung der Erfindung Stabilitätsprobleme mit fatalen Folgen verursachen können, muß die Stellantrieb auf diese selten auftretende Maximalbeanspruchung ausgelegt werden, um Stellgeschwindigkeitssättigungen mit deren Stabilitätsproblemen zu vermeiden. Der Erfindung hingegen ermöglicht es nun, den Stellantrieb schwächer und damit kostengünstiger zu dimensionieren, da die dann auftretenden Stellgeschwindigkeitsbegrenzungen nicht zu Stabilitätsproblernen führen. Es müsste lediglich eine etwas geringere Regelgüte in Kauf genommen werden, wenn die Stellgeschwindigkeitsbegrenzungen auftreten.

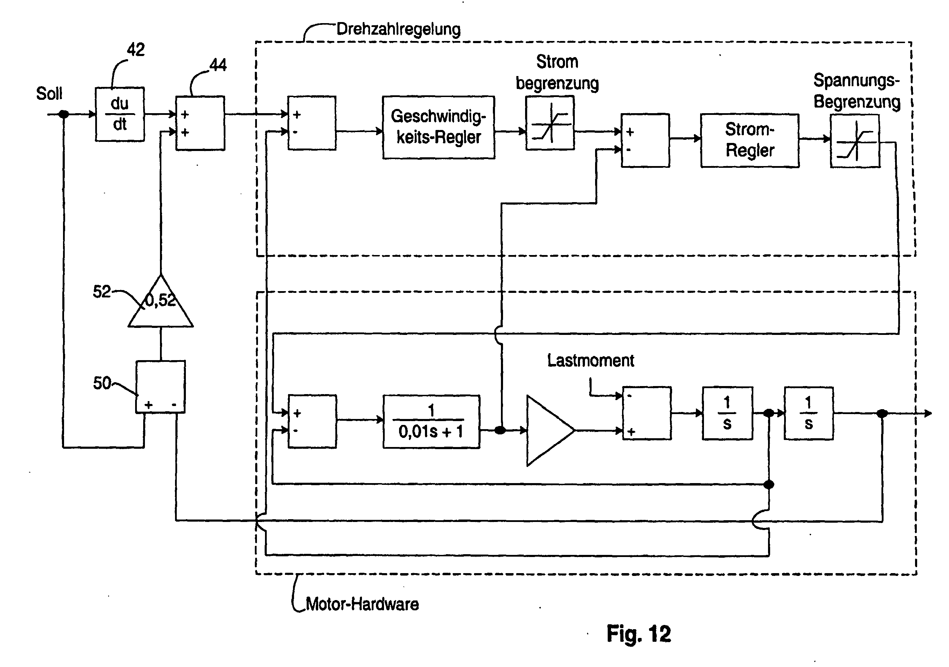

Die vorliegende Schaltungsanordnung kann man auch verwenden, wenn anstelle eines geregelten Aktuators oder Schaltglieds ein Aktuator mit integrierendem Stellverhalten verwendet wird. Dies ist in Fig. 4 durch das strichlinierte Kästchen 60 dargestellt, deren darin enthaltenen Elemente, nämlich Amplitudenbegrenzungsglied 46 und Integrationsglied 48 beispielsweise einem integrierenden Stellmotor zuzuordnen wären. Dieser Stellmotor kann entweder von sich aus schon das integrierende Stellverhalten aufweisen oder es wird ihm durch eine Regelung das integrierende Stellverhalten aufgeprägt, wie dies in Fig. 12 am Beispiel gezeigt wird. Dort ist zu sehen, wie die Schaltung gemäß Fig. 4, jetzt ohne Begrenzer 46 und ohne Integrator 48 direkt auf einen integrierenden Stellantrieb angewandt wird. Es werden nur die Elemente 42, 44, 50 und 52 benötigt. Der integrierende Stellantrieb übernimmt also die Rolle des Begrenzers 46 und des Integrators 48. Er besteht aus einer Motor-Hardware, die mit Hilfe einer (nicht näher erläuterten) Drehzahlregelung integrierendes Stellverhalten bekommt. Die Rolle des hier nicht verwendeten Begrenzers 46 übernehmen jetzt verschiedene Elemente (in Fig. 12 schattiert gezeichnet), die jedoch alle wie eine Begrenzung der Stellgeschwindigkeit wirken: die Strombegrenzung und die Spannungsbegrenzung in der Drehzahlregelung und das äußere Lastmoment, das direkt am Motor angreift.

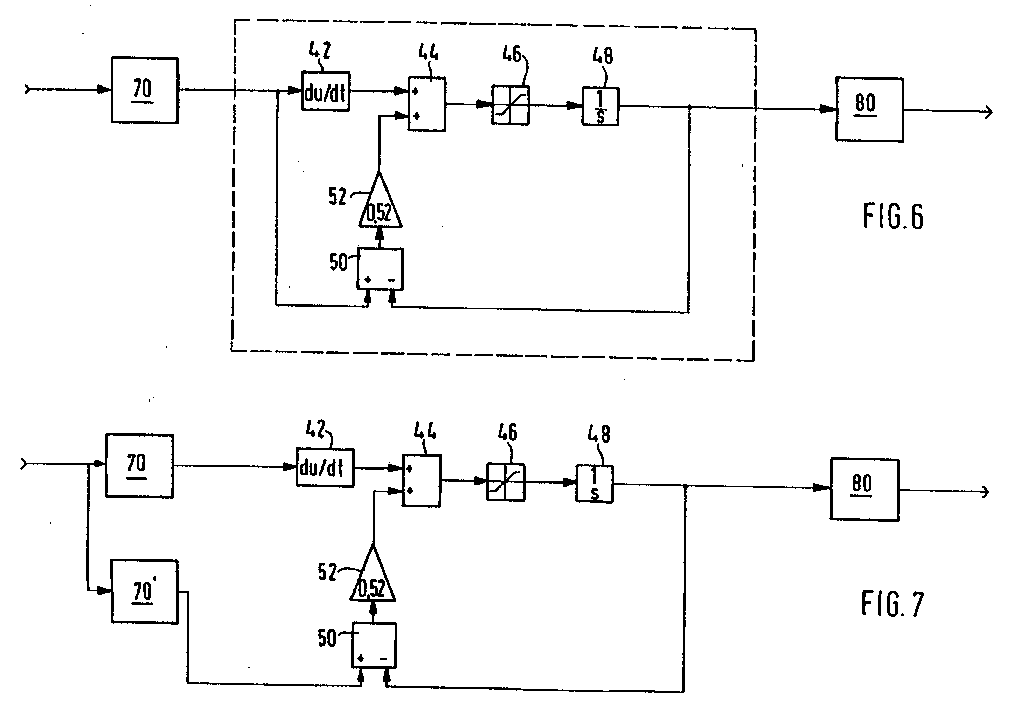

Der Vorteil einer solchen Anwendung der Erfindung als "intelligente Motorpositions-Regelung" besteht darin, das der Anwender nicht mehr explizit Werte für die maximale und minimale Stellgeschwindigkeit angeben muss, wie es z. B. in den Ausführungsbeispielen gemäß Fig. 4 und den nachfolgend noch zu erläuternden Fig. 7 bis 11 der Fall ist. Damit passt sich diese Schaltung automatisch an die gerade vorliegende Stellratenbegrenzung an.

Die Wichtung zwischen Phasentreue und Amplitudentreue ließe sich wieder durch die Verstärkung (Verstärker 52) festlegen. Die Einstellung der Verstärkung kann von beliebigen, situationsabhängigen Systemparametem abhängig gemacht werden.

Eine andere Anwendungsmöglichkeit der Erfindung besteht darin, sie zum "Fading" eines Signalverlaufs von einem beliebigen Ausgangswert hin zu einem sich ständig verändernden Signalverlauf einzusetzen, wenn man beim Übergang auf den Signalverlauf eine maximale Signaländerungsgeschwindigkeit nicht überschreiten möchte. Dafür müsste der Signalverlauf in den Eingang der erfindungsgemäßen Schaltung gemäß Fig. 4 gespeist werden und zu Beginn der Integrator 48 mit dem Ausgangswert initialisiert werden. Im Amplitudenbegrenzer 46 kann man die maximal erlaubte Signaländerungsgeschwindigkeit während des Fading-Vorgangs angeben.

Eine weitere Anwendungsmöglichkeit der Erfindung ist es, falsche, beispielsweise durch einen Sensorfehler verursachte und dann vom Regelungssystem berechnete, zu schnell weglaufende oder springende Stellkommandos zu verhindern. Die Begrenzung 46 (Fig. 4) grenzt dann die Geschwindigkeit des "Weglaufens" des fehlerhaften Stellkommandos ein. Siehe dazu auch Patentanmeldung **DE 10045385 A1.**

In Fig. 6 ist die in Fig. 4 dargestellte Schaltungsanordnung zwischen einem Regler 70 und einem Stellmotor 80 eingefügt (vgl. strichliniertes Kästchen). Vom Regler 70, der am Reglereingang als Eingangssignal beispielsweise eine Regeldifferenz erhält, bekommt die erfindungsgemäße Schaltungsanordnung den ursprünglichen Sollwert Soll als Stellmotor-Sollwert übermittelt.

Der von der Schaltungsanordnung modifizierte Sollwert Soll_{korr_}3 wird dann an den Stellmotor 80 abgegeben, der entsprechend ein zu betätigendes Element verstellt.

In Fig. 7 ist eine weitere Ausführungsform der Erfindung dargestellt. Dabei bezeichnen im folgenden gleiche Bezugszeichen gleiche Schaltelemente. Die Ausführungsform in Fig. 7 unterscheidet sich gegenüber derjenigen in Fig. 6 lediglich dadurch, dass der für das Differenzglied 50 bestimmte Sollwert von einer Kopie 70' des Reglers 70 stammt. Mit anderen Worte ist der Regler 70 aus Fig. 6 im Ausführungsbeispiel gemäß Fig. 7 in zwei gleiche Regler 70 und 70' aufgesplittet worden, wobei der Ausgang des ersten Reglers 70 mit dem ersten Schaltungszweig und der Ausgang der Reglerkopie 70' mit dem zweiten Schaltungszweig verbunden ist.

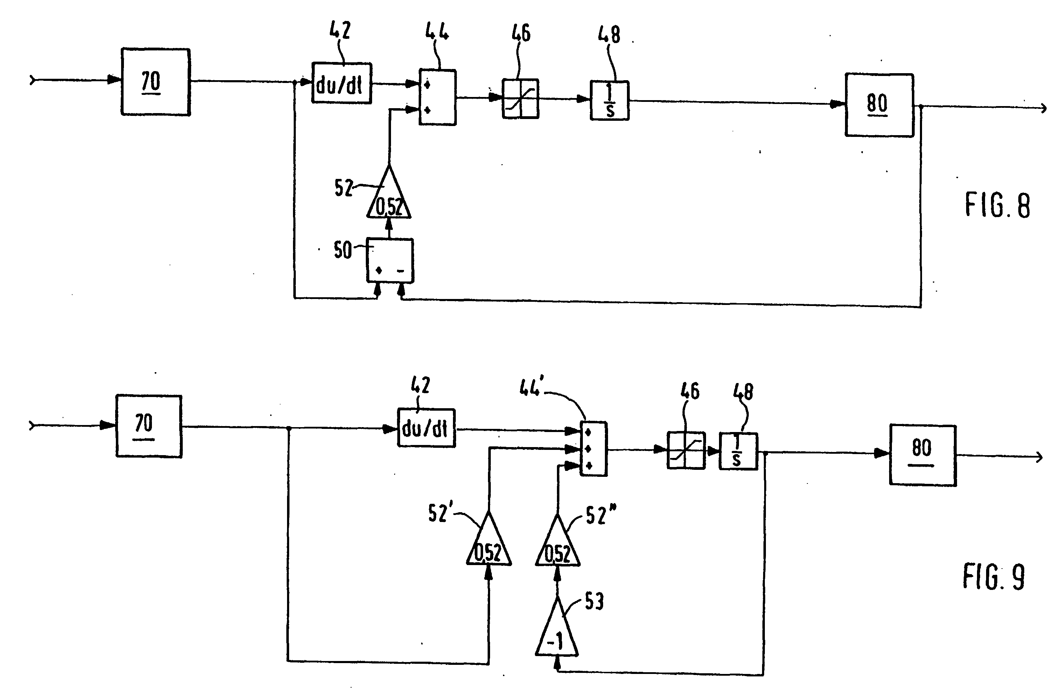

Die in Fig. 8 dargestellte weitere Ausführungsform der Erfindung unterscheidet sich gegenüber derjenigen in Fig. 6 dargestellten lediglich dadurch, dass als Eingangswert für den negativen Eingang am Differenzglied 50 nicht der modifizierte Sollwert Soll_{korr_}3 selbst sondern der Aktuator-Istwert (Wert am Ausgang des Aktuators) verwendet wird.

Bei der Ausführungsform in Fig. 9 ist gegenüber derjenigen in Fig. 6 die aus Differenzglied 50 und Verstärker 52 bestehende Einheit in getrennte Zweige aufgesplittet worden. Demgemäß wird der vom Regler 70 stammende ursprüngliche Sollwert Soll direkt über einen Verstärker 52' einem zweiten Eingang eines Summierers 44' zugeführt, welcher nunmehr drei Eingänge besitzt. An einem dritten Eingang liegt ein Signal an, welches von einem weiteren Verstärker 52" stammt, der das von einem Invertierglied 53 stammende korrigierte Sollwertsignal Soll_{korr_}3 verarbeitet. Die Wirkungen der Schaltungsanordnungen aus den Fig. 6 und 9 sind jedoch gleich.

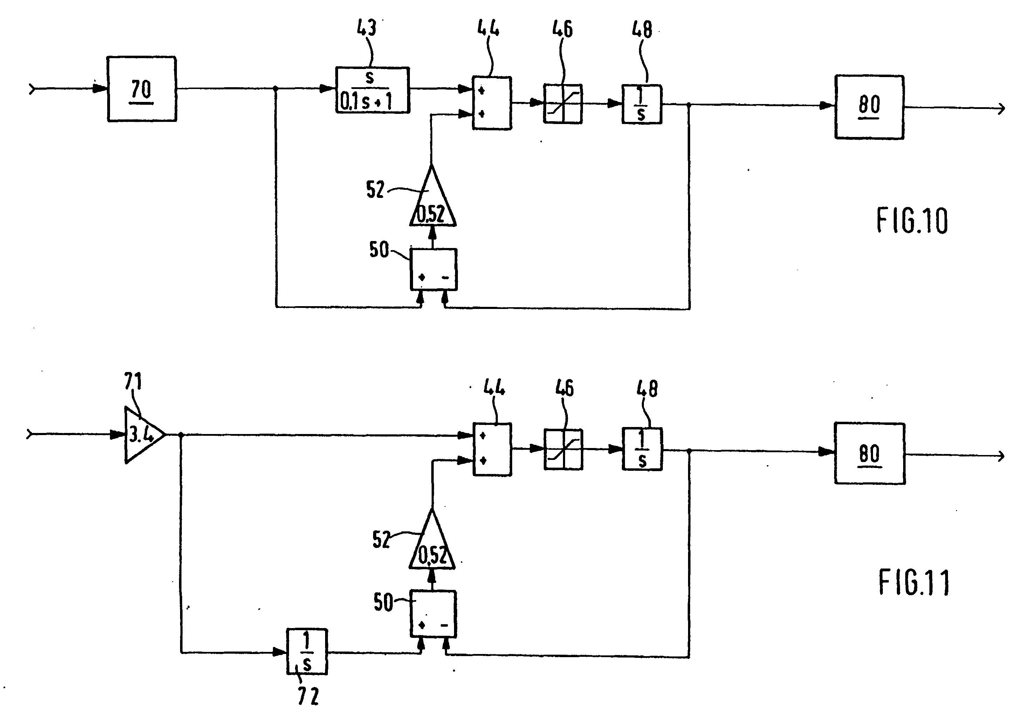

Die in Fig. 10 dargestellte Ausführungsform besitzt einen modifizierten Differenzierer 43, welcher zusätzlich zum Differenzierer noch ein Filter zur Glättung eines verrauschten Signals enthält. Vorliegend ist das Differenzierglied umgewandelt in ein sogenanntes D-T1-Glied mit einer Übertragungsfunktion f = s/(Ts+1).

In jedem Fall kann der Amplitudenbegrenzer 46 natürlich auch durch ein ähnlich wirkendes Element ersetzt werden.

Eine stärker modifizierte Ausführungsform ist in Fig. 11 zu erkennen. Dort wurde auf einen Differenzierer im ersten Schaltungszweig verzichtet. Dafür wurde im zweiten Schaltungszweig ein zusätzlicher Integralregler 72 eingeführt. Zusammen mit dem Integralregler 71 ergibt sich auch hier eine Schaltungsanordnung mit einem ersten (phasentreuen) und einem zweiten (amplitudentreuen) Schaltungszweig, welche über ein Kombinationselement (Summierer 44) miteinander gekoppelt sind. Im Endeffekt besteht der Regler dann aus einem Integral-Regler (Gain und Integrator), wodurch ein "Zusammenwachsen" mit der erfindunggemäßen Schaltung möglich ist.

Insgesamt ermöglichen die vorliegenden Schaltungsanordnungen eine Modifizierung eines Sollwerts in der Weise, dass gleichzeitig eine ausreichende amplitudenund phasentreue Regelung in einem Regelungskreis mit einem Aktuator, der eine Ratenbegrenzung aufweist, durchführbar ist.

## Patentansprüche

1. Schaltungsanordnung zur Modifizierung eines Sollwertes einer Stellgröße mit einem ersten Schaltungszweig umfassend Schaltglieder (42, 46, 48) derart, dass eine Modifizierung des Sollwertes der Stellgröße für eine phasentreue Regelung durchführbar ist, und mit einem zweiten Schaltungszweig umfassend Schaltglieder (50) derart, dass eine Modifizierung des Sollwertes der Stellgröße für eine amplitudentreue Regelung durchführbar ist,
**dadurch gekennzeichnet,**
**dass** die beiden Schaltungszweige über ein Kombinationselement (44) miteinander verbunden sind und über einen vor dem oder im Kombinationselement angeordneten Verstärker (52) entweder im ersten oder im zweiten Schattungszweig ein gewünschtes Einflussverhältnis der einzelnen Schaltzweige einstellbar ist. ,

2. Schaltungsanordnung nach Anspruch 1,
**dadurch gekennzeichnet,**
**dass** der erste Schaltungszweig
- ein Differenzierglied (42), welches aus dem Sollwert der Stellgräße eine Ableitung bildet,
- ein Amplitudenbegrenzungsglied (46) mit einem Eingang, welcher mittelbar oder unmittelbar mit dem Ausgang des Differenzierglieds (42) verbunden ist, und
- ein Integrationsglied (48), dessen Eingang mit dem Ausgang des Amplitudenbegrenzungsglieds (46) verbunden ist und an dessen Ausgang ein modifizierter Sollwert der Stellgröße anliegt, umfasst.

3. Schaltungsanordnung nach einem der Ansprüche 1 oder 2,
**dadurch gekennzeichnet,**
**dass** ein Verstärkerglied in dem ersten Schaltungszweig vor dem Kombinationselement (44) vorgesehen ist, welches ihr Eingangssignal von dem Differenzierglied (42) erhält und das verstärkte Signal an das Kombinationsglied (44) weitergibt.

4. Schaltungsanordnung nach einem der Ansprüche 1 bis 3,
**dadurch gekennzeichnet,**
**dass** der zweite Schaltungszweig ein Differenzglied (50) mit einem positiven und einem negativen Eingang umfasst, wobei an einem positiven Eingang der ursprüngliche Sollwert der Stellgröße und an einem negativen Eingang der modifizierte Sollwert der Stellgröße oder ein Aktuator-Istwert anliegt.

5. Schaltungsanordnung nach einem der vorhergehenden Ansprüche,
**dadurch gekennzeichnet,**
**dass** ein Verstärkerglied (52) in dem zweiten Schaltungszweig vor dem Kombinationselement (44) vorgesehen ist, welches ihr Eingangssignal von dem Differenzglied (50) erhält und das verstärkte Signal an das Kombinationselement (44) weitergibt.

6. Schaltungsanordnung nach einem der Ansprüche 1 bis 3,
**dadurch gekennzeichnet,**
**dass** der zweite Schaltungszweig einen Invertierer (53) umfasst, an dem der modifizierte Sollwert der Stellgröße anliegt und der sein Ausgangssignal an ein Verstärkungsglied (52") abgibt, und ein weiteres Verstärkungsglied (52') vorgesehen ist, welches als Eingangssignal den ursprünglichen Sollwert der Stellgröße erhält, und dass beide Verstärkungsglieder (52', 52") ihr Ausgangssignal an das Kombinationselement (44) weitergeben.

7. Schaltungsanordnung nach einem der vorhergehenden Ansprüche,
**dadurch gekennzeichnet,**
**dass** die Verstärkungen der Verstärkungsglieder variabel einstellbar sind.

8. Schaltungsanordnung nach einem der vorhergehenden Ansprüche,
**dadurch gekennzeichnet,**
**dass** als Kombinationselement ein erster Summierer (44) mit zumindest zwei Eingängen und einem Ausgang vorgesehen ist, wobei das Signal vom Differenzierglied (42) einem Eingang zugeführt ist, das aus dem Differenzglied (50) stammende Signal einem anderen Eingang oder die aus den Verstärkungsgliedern (52', 52") stammenden Signale dem anderem und einem weiteren Eingang zugeführt sind und der Ausgang des ersten Summierers mit der Amplitudenbegrenzungsschaltung (46) verbunden ist.

9. Schaltungsanordnung nach einem der vorhergehenden Ansprüche,
**dadurch gekennzeichnet,**
**dass** ein Filter zur Glättung eines verrauschten Signal im ersten Schaltungszweig vorgesehen ist.

10. Schaltungsanordnung nach einem der vorhergehenden Ansprüche,
**dadurch gekennzeichnet,**
**dass** ein Integralregler vorgesehen ist, welcher sein Ausgangssignal an einen ersten Eingang eines zweiten Summierers mit zwei Eingängen abgibt, an dessen zweiten Eingang der ursprüngliche Sollwert der Stellgröße anliegt und dessen Ausgang mit dem positiven Eingang des Differenzgliedes verbunden ist.

11. Schaltungsanordnung nach Anspruch 10,
**dadurch gekennzeichnet,**
**dass** der Eingang des Integralreglers mit einem von zwei Eingängen eines dritten Summierers verbunden ist, wobei dessen zweiter Eingang mit dem Ausgang des Differenziergliedes gekoppelt ist und der Ausgang des dritten Summierers mit dem ersten Eingang des ersten Summierers verbunden ist.

12. Schaltungsanordnung nach Anspruch 1,
**dadurch gekennzeichnet, dass** ein von sich aus integrierender Stellantrieb eingesetzt wird.

13. Schaltungsanordnung nach Anspruch 12,
**dadurch gekennzeichnet,**
**dass** der Stellantrieb eine Regelung zur Stellgeschwindigkeitsregelung enthält.

14. Schaltungsanordnung nach einem der vorhergehenden Ansprüche,
**dadurch gekennzeichnet,**
**dass** die Differenzierglieder (42) und/oder die Verstärkungsglieder (52) und/oder die Signalleitungen zusätzliche dynamische Glieder enthalten.

15. Schaltungsanordnung nach Anspruch 14,
**dadurch gekennzeichnet,**
**dass** die Parameter der dynamischen Glieder variabel sind.

## Claims

1. A circuit arrangement for the modification of a target value of a positioning value with a first circuit branch comprising circuit elements (42, 46, 48) such that a modification of the target value of the positioning value for a phase-true regulator can be performed and with a second circuit branch comprising circuit elements (50) such that a modification of the target value of the positioning value for an amplitude-true regulation can be performed,
**characterised in that**
both circuit branches are joined together via a combining element (44) and the desired ratio of influence of the individual circuit branches can be adjusted by means of an amplifier (52) arranged either before or in the combining element.

2. A circuit arrangement according to claim 1,
**characterised in that**,
the first circuit branch
- forms a differentiating element (42) which forms a derivative from the target value of the setting value,
- an amplitude-limiting element (46) with one input which indirectly or directly is joined together with the output of the differentiating element (42), and
- an integration element (48), whose input is joined to the output of the amplitude-limiting element (46) and at whose output a modified target value of the setting value appears.

3. A circuit arrangement according to any one of claims 1 or 2,
**characterised in that**
an amplifying element is provided in the first circuit branch before the combining element (44), which receives its input signal from the differentiating element (42) and passes on the amplified signal to the combination element (44).

4. A circuit arrangement according to any one of claims 1 to 3,
**characterised in that**
the second circuit branch includes a differentiating element (50) with a positive and a negative input whereby on the positive input the original target value of the setting value and on a negative input the modified target value of the setting value or an actuator actual value appears.

5. A circuit arrangement according to any one of the foregoing claims,
**characterised in that**
an amplifying element (52) is provided in the second circuit branch before the combining element (44), which receives its input signal from the differentiating element (50) and passes the amplified signal to the combining element (44).

6. A circuit arrangement according to any one of claims 1 to 3,
**characterised in that**
the second circuit branch includes an inverter (53) onto which the modified target value of the setting value is applied and which provides its output signal to an amplifying element (52") and a further amplifying element (52') is provided which receives the original target value of the setting value as its input signal and that both amplifying elements (52', 52") pass on their output signal to the combination element (44).

7. A circuit arrangement according to any one of the foregoing claims,
**characterised in that**
the amplification of the amplifying elements can be variably adjusted.

8. A circuit arrangement according to any one of the foregoing claims,
**characterised in that**
as the combination element a first adder (44) is provided with at least two inputs and one output, whereby the signal from the differentiating element (42) is taken to one input, the signal arising from the differentiating element (50), or the signals arising from the amplifying elements (52', 52") to the other, and a further input and the output of the first adder is combined with the amplitude-limiting circuit (46).

9. A circuit arrangement according to any one of the foregoing claims,
**characterised in that**
a filter to smooth a noisy signal is provided in the first circuit branch.

10. A circuit arrangement according to one of the foregoing claims,
**characterised in that**
an integral regulator is provided which passes its output signal to a first input of a second adder with two inputs, on whose second input the original target value of the setting value is applied and whose output is joined to the positive input of the differentiating element.

11. A circuit arrangement according to claim 10,
**characterised in that**
the input of the integral regulator is joined to one of two inputs of a third adder, whereby its second input is coupled with the output of the differentiating element and the output of the third adder is joined to the first input of the first adder.

12. A circuit arrangement according to claim 1,
**characterised in that**
an intrinsically integrating setting drive is applied.

13. A circuit arrangement according to claim 12,
**characterised in that**
the setting drive includes a regulator for regulating the setting speed.

14. A circuit arrangement according to any one of the previous claims,
**characterised in that**
the differentiating elements (42) and/or the amplifying elements (52) and/or the signal lines include additional dynamic elements.

15. A circuit arrangement according to claim 14,
**characterised in that**
the parameters of the dynamic elements are variable.

## Revendications

1. Circuit de modification d'une valeur de consigne d'un paramètre de réglage, avec une première branche de couplage comprenant les éléments logiques (42, 46, 48) de manière à ce qu'une modification de la valeur de consigne du paramètre de réglage puisse être réalisée pour une régulation respectant les phases, et avec une deuxième branche de couplage comprenant des éléments logiques (50) de manière à ce qu'une modification de la valeur de consigne du paramètre de réglage puisse être réalisée pour une régulation respectant les amplitudes,
**caractérisé en ce que**
les deux branches de couplage sont reliées l'une l'autre via un élément mixte (44), et un rapport d'influence souhaité des différentes branches de couplage peut être réglé via un amplificateur (52) disposé avant ou dans l'élément mixte soit dans la première soit dans la deuxième branche de couplage.

2. Circuit selon la revendication 1,
**caractérisé en ce que**
la première branche de couplage comprend
- un élément différenciateur (42) qui forme une dérivation à partir de la valeur de consigne du paramètre de réglage,
- un organe de limitation des amplitudes (46) avec une entrée reliée directement ou indirectement à la sortie de l'élément différenciateur (42) et
- un organe d'intégration (48) dont l'entrée est reliée à la sortie de l'organe de limitation des amplitudes (46) et sur la sortie duquel se trouve une valeur de consigne modifiée du paramètre de réglage.

3. Circuit selon l'une des revendications 1 ou 2,
**caractérisé en ce que**
un organe d'amplification est prévu dans la première branche de couplage de l'élément mixte (44) qui reçoit son signal d'entrée par l'élément différenciateur (42) et qui transmet le signal amplifié à l'élément mixte (44).

4. Circuit selon l'une quelconque des revendications 1 à 3,
**caractérisé en ce que**
la deuxième branche de couplage comprend un élément différenciateur (50) avec une entrée positive et une entrée négative, la valeur de consigne initiale du paramètre de réglage se trouvant sur une entrée positive alors que la valeur de consigne modifiée du paramètre de réglage ou une valeur réelle de l'actuateur se trouve sur une entrée négative.

5. Circuit selon l'une quelconque des revendications précédentes,
**caractérisé en ce que**
un élément d'amplification (52) est prévu dans la deuxième branche de couplage devant l'élément mixte (44) qui reçoit son signal d'entrée par l'élément différenciateur (50) et qui transmet le signal amplifié à l'élément mixte (44).

6. Circuit selon l'une quelconque des revendications 1 à 3,
**caractérisé en ce que**
la deuxième branche de couplage comprend un inverseur (53) sur lequel se trouve la valeur de consigne modifiée du paramètre de réglage et qui émet son signal de sortie sur un organe d'amplification (52"), il est prévu un autre organe d'amplification (52') qui comprend la valeur de consigne initiale du paramètre de réglage en tant que signal d'entrée, et les deux organes d'amplification (52', 52") transmettent leur signal de sortie à l'élément mixte (44).

7. Circuit selon l'une quelconque des revendications précédentes,
**caractérisé en ce que**
les amplifications des organes d'amplification peuvent être réglées de façon variable.

8. Circuit selon l'une quelconque des revendications précédentes,
**caractérisé en ce que**
un premier additionneur analogue (44) est prévu avec au moins deux entrées et une sortie en tant qu'élément mixte le signal de l'élément différenciateur (42) étant amené à une entrée, le signal issu de l'élément différenciateur (50) étant amené à une autre entrée, ou les signaux issus des organes d'amplification (52', 52") étant amenés à l'autre entrée alors que la sortie du premier additionneur analogue est reliée au montage de limitation des amplitudes (46).

9. Circuit selon l'une quelconque des revendications précédentes,
**caractérisé en ce que**
un filtre est prévu pour uniformiser un signal bruyant dans la première branche de couplage.

10. Circuit selon l'une quelconque des revendications précédentes,
**caractérisé en ce que**
il est prévu un régulateur intégral qui émet son signal de sortie à une première entrée d'un deuxième additionneur analogue à deux entrées, la valeur de consigne initiale du paramètre de mesure se trouvant sur la deuxième entrée de cet additionneur et la sortie de l'additionneur étant reliée à l'entrée positive de l'élément différenciateur.

11. Circuit selon la revendication 10,
**caractérisé en ce que**
l'entrée du régulateur intégral est reliée à l'une des deux entrées d'un troisième additionneur analogue, avec sa deuxième entrée couplée à la sortie de l'élément différenciateur et la sortie du troisième additionneur analogue reliée à la première sortie du premier additionneur analogue.

12. Circuit selon la revendication 1,
**caractérisé en ce que**
un vérin intégrateur par lui-même est utilisé.

13. Circuit selon la revendication 12,
**caractérisé en ce que**
le vérin comprend une régulation pour réguler la vitesse de réglage.

14. Circuit selon l'une quelconque des revendications précédentes,
**caractérisé en ce que**
l'élément différenciateur (42) et/ou l'organe d'amplification (52) et/ou les conduites de signaux comprennent des organes dynamiques supplémentaires.

15. Circuit selon la revendication 4,
**caractérisé en ce que**
les paramètres des organes dynamiques sont variables.
